# EUROPEAN PATENT SPECIFICATION

(11) **EP 4 020 126 B1**
(45) Date of publication and mention of the grant of the patent: **12.02.2025**
(21) Application number: 21197626.1
(22) Date of filing: 20.09.2021
(51) Int. Cl.: G06F 1/26, G06F 1/3215, G06F 1/3231, G06F 21/32, G06F 21/81

(54) **SECURE DEVICE POWER-UP APPARATUS AND METHOD**
EINRICHTUNG UND VERFAHREN ZUM HOCHFAHREN EINER SICHEREN VORRICHTUNG
APPAREIL ET PROCÉDÉ DE MISE SOUS TENSION DE DISPOSITIF SÉCURISÉS

(30) Priority: 23.12.2020 US 202017132844
(43) Date of publication of application: 29.06.2022
(73) Proprietor: Intel Corporation, Santa Clara, CA 95054 (US)
(72) Inventor: RAJAGOPAL, Pannerkumar, 560035 Bangalore (IN); PILLAI, Prakash, 560075 Bangalore (IN); PAWAR, Sagar, 560075 Bangalore (IN); N, Raghavendra, 560103 Bangalore (IN); PIR, Ovais, 190023 Srinagar (IN)
(74) Representative: HGF

(56) References cited:
- US-A1- 2002 095 608
- US-A1- 2008 253 624
- US-A1- 2010 153 752
- US-A1- 2013 007 873

## Description

### BACKGROUND

Generally, upon failed unauthorized access(es) to a computing device such as a smartphone, laptop, etc., the computing device can be reset to factory settings and re-used with same or new memory. For example, a stolen computing device can be resold in black or grey markets by completing a factory reset process of the computing device. As such, current devices are not theft proof.

US 2002/095608 A1 describes a switch for power gating which is disposed between an electronic device and its power source.

US 2008/253624 A1 describes an authentication apparatus for authenticating a fingerprint to power up an electronic device.

US 2010/153752 A1 describes a portable computer having a biometric authentication device.

### SUMMARY

The extent of protection conferred is determined by the claims.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
**Fig. 1** illustrates a computing system with secure device power-up, in accordance with some embodiments.
**Fig. 2** illustrates a Serial Peripheral Interface (SPI) flash software stack with secure biosensor data region, in accordance with some embodiments.
**Fig. 3** illustrates a state diagram of a secure device power-up, in accordance with some embodiments.
**Fig. 4** illustrates a smart device or a computer system or an SoC (System-on-Chip) with secure device power-up, in accordance with some embodiments.

### DETAILED DESCRIPTION

Some embodiments describe a power-up scheme for a computing system that applies a biometric sensor (e.g., a fingerprint sensor, eye sensor, etc.) to authenticate a user before enabling power-up of the computing system or to resume transition to a power state (e.g., one of the power states defined by the Advance Configuration and Power Interface (ACPI)). In some embodiments, output of the biometric sensor is compared against data of a registered user for a match. The data may include an original copy of an output of the biometric sensor saved in a non-volatile memory (e.g., serial peripheral interface (SPI) flash device). If a match exists, a logic in the computing system will allow the computing system to power-up. In the absence of a match, the computing system will not be powered up. In some embodiments, battery charging is also disabled if the match is not found.

In some embodiments, the power-up scheme includes an apparatus which comprises a power gate controllable by a control, the power gate coupled to a first power supply rail and a second power supply rail, wherein the second power supply rail is coupled to a computing platform. The apparatus in various embodiments includes a logic to generate the control signal to turn on or off the power gate according to a match between a first biometric data stored in memory and second biometric data sensed by a biometric sensor. In some embodiments, the logic turns off the power gate to cut off a second power on the second power supply rail when the first biometric data does not match with the second biometric data. In some embodiments, the logic turns on the power gate to provide the first power as a second power on the second power supply rail when the first biometric data substantially matches with the second biometric data. In some embodiments, the memory is a non-volatile memory. In some embodiments, the biometric sensor is one of: a finger print sensor, an eye system, a face recognition apparatus. In some embodiments, the first power supply rail is coupled to a battery charger controller which is coupled to a plurality of power sources. In some embodiments, the plurality of power sources includes: a USB Type-C power source, a battery, and an AC adaptor.

In some embodiments, the apparatus comprises a biometric controller to issue an interrupt to the logic when the biometric sensor generates the second biometric data. In some embodiments, the apparatus comprises a DC-DC converter to receive a first power on the first power supply rail and to generate a third power on a third power supply rail. In some embodiments, the apparatus comprises a power control switch to provide one of the third power or a fourth power on a fourth power supply rail to a fifth power supply rail. In some embodiments, the fourth power supply rail is coupled to an alternate power source. In some embodiments, the alternate power source comprises a coin battery. In some embodiments, the fifth power supply rail is to provide power to the biometric sensor, the biometric controller, the logic, and the memory. In some embodiments, the power control switch comprises a multiplexer which is to provide the fourth power to the fifth power supply rail when the third power is below a threshold.

There are many technical effects of various embodiments. For example, the secure power-up apparatus and method protects user data in the computing system by making the computing system inoperable to subsequent unauthorized owner(s). Existing authentication schemes operate when a device is powered-up, which allows for malice by performing factory reset. Other technical effects will be evident from the various figures and embodiments.

In the following description, numerous details are discussed to provide a more thorough explanation of embodiments of the present disclosure. It will be apparent, however, to one skilled in the art, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate more constituent signal paths, and/or have arrows at one or more ends, to indicate primary information flow direction. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

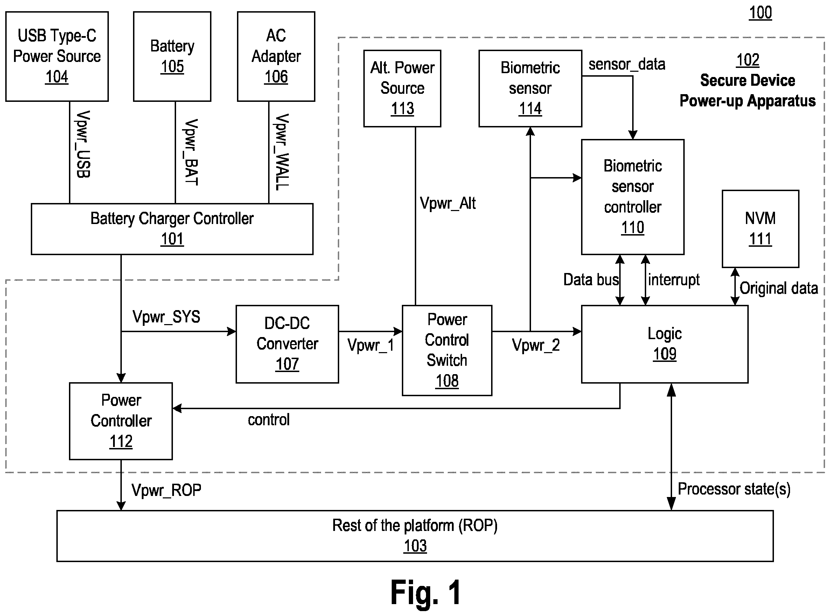

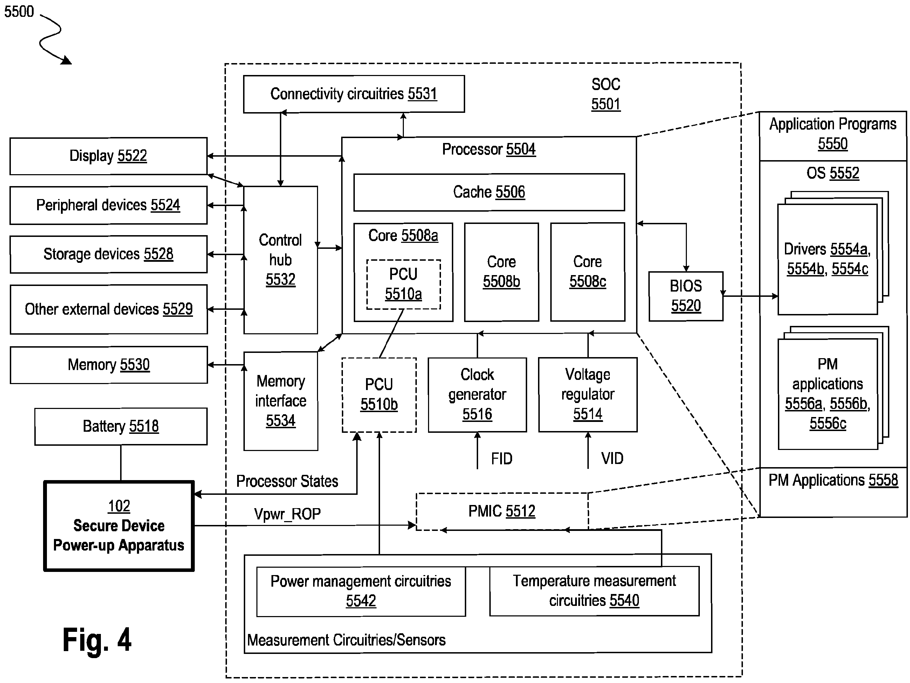

**Fig. 1** illustrates a computing system 100 with secure device power-up, in accordance with some embodiments. Computing system 100 comprises battery charger controller 101, secure device power-up apparatus 102 (herein apparatus 102), rest of the platform (ROP) 103, and a number of power sources such as Universal Serial Bus (USB) Type-C (USB Type-C) 104, battery 105, and AC adapter 106. The power supply from the various power sources is processed or managed by battery charger controller 101. For example, Vpwr_USB from USB Type-C Power Source 104, Vpwe_BAT from battery 105, and/or Vpwr_WALL are received by Battery Charger Controller 101 from USB Type-C 104, battery 105, and AC adapter 106, respectively. Here, ROP 103 may include computer system components of **Fig. 4****.** In some embodiments, apparatus 102 comprises DC-DC converter 107, power control switch 108, logic 109, biometric sensor controller 110, non-volatile memory (NVM) 111, power controller 112, alternate power source 113, and biometric sensor 114.

In some embodiments, DC-DC converter 107 receives Vpwr_SYS as input from Battery Charger Controller 101 and generates a regulated output supply Vpwr_1 (e.g., 3.3V). Any suitable DC-DC converter can be used for implementing converter 107. For example, buck converter, boost converter, buck-boost converter, etc., can be used for implementing converter 107. In some embodiments, Vpwr_1 provides power to power control switch 108 which passes on Vpwr_1 as Vpwr_2 as power supply for logic 109, biometric sensor controller 110, NVM 111, and biometric sensor 114. In some embodiments, power control switch 108 comprises a power multiplexer that provides one of Vpwr_Alt (alternate power supply) or Vpwr1 as power supply to node Vpwr_2. In some embodiments, Vpwr_Alt is received from an alternate power source 113. Examples of power source 113 include coin battery and/or other long-term batter sources.

In some embodiments, power control switch 108 comprises a logic that detects absence or presence of Vpwr_1, and depending on that, provides power to logic 109, biometric sensor controller 110, NVM memory 111, and biometric sensor 114. In one example, when controller 101 detects no power supply (e.g., when battery 105 is dead and other power sources are not connected), Vpwr_1 is discharged to ground. Power control switch may detect that that output Vpwr_Alt as power supply for Vpwr_2 when Vpwr_1 is discharged to ground. In one implementation, a select signal for a multiplexer of power control switch 108 is controlled by Vpwr_1. When controller 101 detects power supply on Vpwr_1, multiplexer of power control switch 108 selects Vpwr_1 and passes it on to Vpwr_2. As such, apparatus 102 is able to perform device authentication in the absence (temporary or permanent) of typical power sources 104, 105, and 106.

In some embodiments, biometric controller 110 processes sensor data from biometric sensor 114. Biometric sensor 114 can be one or more sensors to establish identity of a person. These sensors include fingerprint sensor, face recognition, eye sensor, etc. In some embodiments, biometric controller 110 includes logic (hardware and/or software) to process the kind of sensor_data, store it in NVM 111, perform a match analysis with a prestored sensor data in NVM 111. In some embodiments, the match analysis is performed by logic 109. In some embodiments, controller 110 issues an interrupt for logic 109 upon receiving sensor_data.

In some embodiments, NVM 110 comprises a Serial Peripheral Interface (SPI) flash. SPI complies with a synchronous serial communication interface specification for short-distance communication (e.g., in an embedded system). SPI flash is typically a low power and low speed memory (e.g., 133 MHz speed). It can be accessed using interfaces like I2C. In some embodiments, the flash memory comprises NAND and/or NOR memory. In some embodiments, NVM 110 comprises one of: ferroelectric memory, phase-change memory (PCM), resistive memory (ReRAM), or magnetic RAM (MRAM). In various embodiments, NVM stores the original biometric sensor data (also referred to as the golden data) which is compared with input received by a biometric sensor 114. While the various embodiments illustrate one biometric sensor 114, multiple biometric sensors can be used. In some embodiments, NVM 111 includes the original authentic user biometric sensor data in NVM 111.

In some embodiments, logic 109 comprises a finite state machine that generates a control signal for power controller 113 based on whether a match is determined, and/or based on processor state (e.g., sleep state, performance state, etc.). Depending on the system state pr processor state, logic 109 can detect and/or understand the biometric input data and then authenticate the user. Logic 109 then releases the master control controller 112 to boot the system from the respective state to normal on state. In various embodiments, power controller 112 gates the power supply Vpwr_ROP to ROP 103 based on a logic value of the control signal from logic 109. The logic value of the control signal depends on whether logic 109 determines that a biometric feature of a user is authenticated. If logic 109 determines that the biometric feature of the user is authenticated, power controller 112 allows Vpwr_SYS to be passed on to Vpwr_ROP. Here, node names and signal names are interchangeably used. For example, Vpwr_ROP may refer to power supply voltage and/or current or node Vpwr_ROP depending on the context of the sentence. Without Vpwr_SYS being providing to Vpwr_ROP, ROP 103 remains powered off. In some embodiments, power controller 112 comprises a power switch or power gate with its gate controlled by control and source terminal coupled to Vpwr_SYS and drain terminal coupled to Vpwr_ROP.

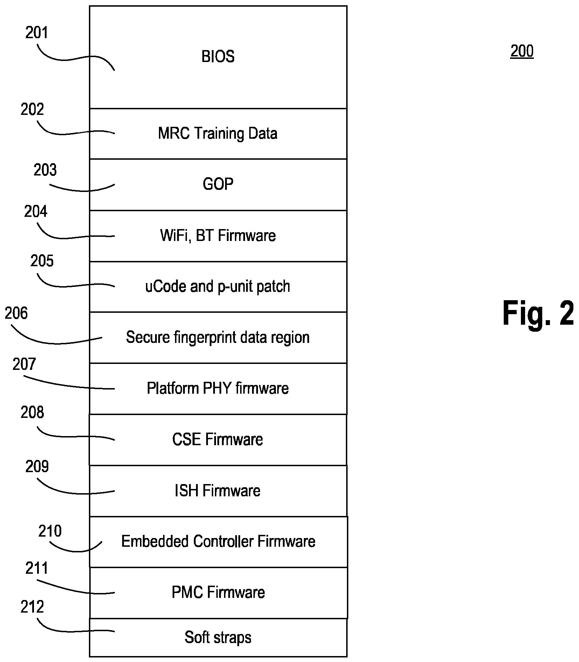

**Fig. 2** illustrate a Serial Peripheral Interface (SPI) flash software stack 200 with secure biosensor data region, in accordance with some embodiments. In some embodiments, software stack 200 is saved in NVM 111. In some embodiments, stack 200 comprises BIOS 201, MRC training data 202, GOP 203, WiFi and/or Bluetooth firmware (FW) 204, microcode (uCode) and power management unit (p-unit) patch 205, secure biometric (e.g., fingerprint) data region 206, platform physical (PHY) FW 207, CSE FW 208, ISH FW 209, embedded controller FW 210, power management controller (PMC) FE 211, and soft straps 212.

BIOS 201 is a Basic Input/Output System, which is responsible for booting up ROP 103. MRC training data 202 refers to memory reference code that includes information about memory settings, frequency, timing, driving and detailed operations of a memory controller. GOP 203 refers to Graphics Output Protocol, which provides limited runtime service support. GOP is a standard for UEFI where one can query nodes and set modes. GOP is an Extensible Firmware Interface (EFI) boot time service that is not accessed after a bot exit service. Unified Extensible Firmware Interface (UEFI) is a specification for a software program that connects a computer's firmware to its operating system (OS). UEFI is installed at the time of manufacturing and is the first program that runs when a computer is turned on. Physical FW 207, CSE FW 208, ISH FW 209, embedded controller FW 210 are basic firmware regions for IA platform boot up/security.

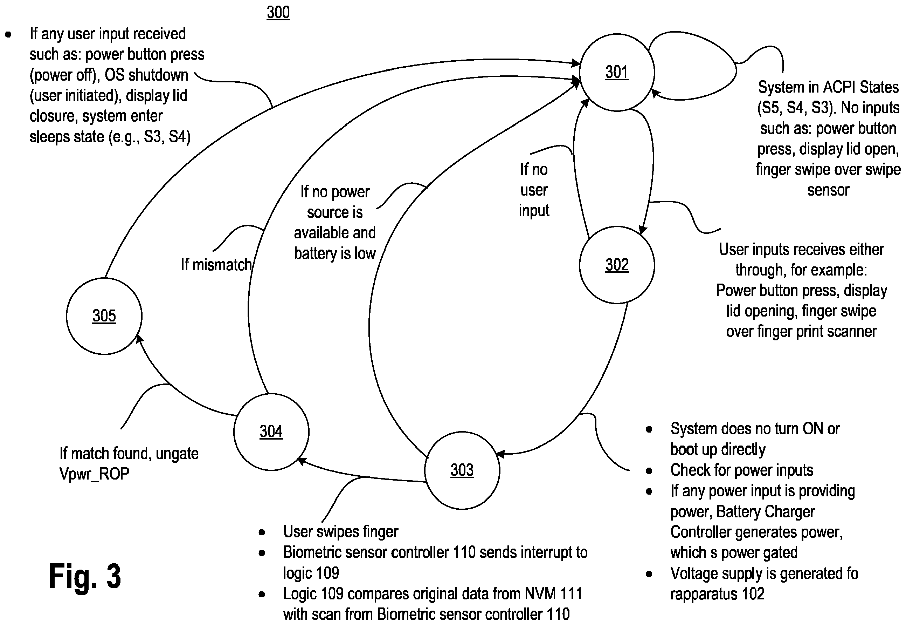

**Fig. 3** illustrates state diagram 300 of a secure device power-up, in accordance with some embodiments. In some embodiments, state diagram 300 is implemented in hardware, software, or a combination of them. In some embodiments, state diagram 300 is implemented by logic 109. State 301 is a default state when system is in sleep state and no inputs are detected. In some embodiments, a system may be in one of S3, S4, or S5 states as defined by the Advanced Configuration and Power Interface (ACPI) specification. In some embodiments, the process performed by logic 109 remains in state 301 as long as no power button is pressed, display lid is not opened, and biometric sensor 114 is not engaged. Various embodiments here are described with reference to biometric sensor 114 being a fingerprint sensor. However, state diagram 300 is applicable to any sensor including a biometric sensor.

If apparatus 102 detects a user input being received, then the process moves from state 301 to state 302. For example, when a user presses the power button to turn on system 100, display lid is opened, and/or finger is swiped over the finger print scanner, then the process proceeds to state 302. In some embodiments, after detecting user input if no action is taken by system 100 or by the user, then the process proceeds back to state 301. For example, a timer begins after a user presses the power on button but does not attempt to swipe finger on the scanner, then upon expiration of the timer (e.g., preprogrammed or programmable count value), the process proceeds back to state 301. Once in state 302, system does not boot or turn on, yet. Battery charger controller 101 checks for power inputs such as USB Type-C power source 104, battery 105, or AC adaptor 106. If any one of the power sources are present (as detected by any one of Vpwr_USB, Vpwr_BAT, or Vpwr_WALL), battery charger controller 101 generates the appropriate system power supply Vpwr_SYS. This Vpwr_SYS is provided to DC-DC converter 107 as input to generate Vpwr_1 for the rest of apparatus 102. In various embodiments, Vpwr_SYS (an ungated supply) is gated by power controller 112 till logic 109 instructs otherwise. In some embodiments, Vpwr_SYS may be provided to some logic of ROP 103. For example, ROP 103 may also have a legacy authentication scheme, and that scheme may be powered by Vpwr_SYS. In various embodiments, power to processor(s) of ROP 103 are gated by power controller 112 till logic 109 instructs otherwise via a control signal.

At state 303, logic 109 determines that no power source is active or if battery power Vpwr_BAT is below a threshold (e.g., too low to turn on system 100), then the process proceeds to state 301. If user swipes his/her finger on biometric sensor 114, biometric controller 110 sends an interrupt to logic 109 so logic 109 can begin processing the authentication of the user. In some embodiments, logic 109 reads the original sensor data stored in NVM 111 and compares it with sensor_data received by controller 110. In various embodiments, the comparison is a digital comparison. For example, finger print data or any biometric data is converted from analog to digital form using an analog-to-digital converter (ADC). In some embodiments, the comparison is a bit-wise comparison. In some embodiments, the comparison is considered a match when the stored data is substantially equal to the sensor_data.

At state 304, if a match is determined between the stored data and the sensor_data, then logic 109 generates a control that ungates Vpwr_SYS so that Vpwr_SYS is provided to ROP 103 as Vpwr_ROP. ROP 103 then wakes up. In some embodiments, ROP 103 wakes up from its previous state. At state 305, if any of the following user inputs are received, the process proceeds to state 301. For example, if power button is pressed to turn off system 100, if user initiates a system shutdown via an operating system, display lid is closed, and/or the system is idle as per OS power management policies, system 100 goes into sleep state (e.g., S3, S4 states).

Elements of embodiments (e.g., flowchart with reference to **Fig. 3**) are also provided as a machine-readable medium (e.g., NVM 111) for storing the computer-executable instructions (e.g., instructions to implement any other processes discussed herein). In some embodiments, computing platform comprises memory, processor, machine-readable storage media (also referred to as tangible machine-readable medium), communication interface (e.g., wireless or wired interface), and network bus coupled together.

In some embodiments, logic 109 comprises a processor which is a Digital Signal Processor (DSP), an Application Specific Integrated Circuit (ASIC), a general-purpose Central Processing Unit (CPU), or a low power logic implementing a simple finite state machine to perform the method with reference to **Fig. 3** and/or various embodiments, etc.

In some embodiments, the various logic blocks of logic 109 are coupled together via a Network Bus. Any suitable protocol may be used to implement the network bus. In some embodiments, machine-readable storage medium includes instructions (also referred to as the program software code/instructions) for calculating or measuring distance and relative orientation of a device with reference to another device as described with reference to various embodiments and flowchart.

Program software code/instructions associated with flowcharts with reference to **Fig. 3** (and/or various embodiments) and executed to implement embodiments of the disclosed subject matter may be implemented as part of an operating system or a specific application, component, program, object, module, routine, or other sequence of instructions or organization of sequences of instructions referred to as "program software code/instructions," "operating system program software code/instructions," "application program software code/instructions," or simply "software" or firmware embedded in processor. In some embodiments, the program software code/instructions associated with flowcharts with reference to **Fig. 3** (and/or various embodiments) are executed by system.

In some embodiments, the program software code/instructions associated with reference to **Fig. 3** (and/or various embodiments) are stored in a computer executable storage medium and executed by the processor. Here, computer executable storage medium is a tangible machine-readable medium that can be used to store program software code/instructions and data that, when executed by a computing device, causes one or more processors to perform a method(s) as may be recited in one or more accompanying claims directed to the disclosed subject matter.

The tangible machine-readable medium may include storage of the executable software program code/instructions and data in various tangible locations, including for example ROM, volatile RAM, non-volatile memory and/or cache and/or other tangible memory as referenced in the present application. Portions of this program software code/instructions and/or data may be stored in any one of these storage and memory devices. Further, the program software code/instructions can be obtained from other storage, including, e.g., through centralized servers or peer to peer networks and the like, including the Internet. Different portions of the software program code/instructions and data can be obtained at different times and in different communication sessions or in the same communication session.

The software program code/instructions (associated with reference to **Fig. 3** and other embodiments) and data can be obtained in their entirety prior to the execution of a respective software program or application by the computing device. Alternatively, portions of the software program code/instructions and data can be obtained dynamically, e.g., just in time, when needed for execution. Alternatively, some combination of these ways of obtaining the software program code/instructions and data may occur, e.g., for different applications, components, programs, objects, modules, routines or other sequences of instructions or organization of sequences of instructions, by way of example. Thus, it is not required that the data and instructions be on a tangible machine readable medium in entirety at a particular instance of time.

Examples of tangible computer-readable media include but are not limited to recordable and non-recordable type media such as volatile and non-volatile memory devices, read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs), etc.), ferroelectric memory, resistive RAM, phase change memory (PCM), magnetic RAM (MRAM, among others. The software program code/instructions may be temporarily stored in digital tangible communication links while implementing electrical, optical, acoustical or other forms of propagating signals, such as carrier waves, infrared signals, digital signals, etc. through such tangible communication links.

In general, tangible machine readable medium includes any tangible mechanism that provides (i.e., stores and/or transmits in digital form, e.g., data packets) information in a form accessible by a machine (i.e., a computing device), which may be included, e.g., in a communication device, a computing device, a network device, a personal digital assistant, a manufacturing tool, a mobile communication device, whether or not able to download and run applications and subsidized applications from the communication network, such as the Internet, e.g., an iPhone^{®}, Galaxy^{®}, or the like, or any other device including a computing device. In one embodiment, processor-based system is in a form of or included within a PDA (personal digital assistant), a cellular phone, a notebook computer, a tablet, a game console, a set top box, an embedded system, a TV (television), a personal desktop computer, etc. Alternatively, the traditional communication applications and subsidized application(s) may be used in some embodiments of the disclosed subject matter.

In some embodiments, the machine-readable storage media includes machine-readable instructions stored thereon, that when executed, cause one or more machines to perform a method comprising controlling a power gate, coupled to a first power supply rail and a second power supply rail, according to a control signal, wherein the second power supply rail is coupled to a computing platform. In some embodiments, the method further comprises generating the control signal according to a match between a first biometric data stored in memory and second biometric data sensed by a biometric sensor. In some embodiments, the method further comprises turning off the power gate to cut off a second power on the second power supply rail when the first biometric data does not match with the second biometric data. In some embodiments, the method comprises turning on the power gate to provide the first power as a second power on the second power supply rail when the first biometric data substantially matches with the second biometric data. In some embodiments, the method comprises issuing an interrupt when the biometric sensor generates the second biometric data.

**Fig. 4** illustrates a smart device or a computer system or a SoC (System-on-Chip) with secure device power-up, in accordance with some embodiments. It is pointed out that those elements of **Fig. 4** having the same reference numbers (or names) as the elements of any other figure may operate or function in any manner similar to that described, but are not limited to such. Any block in this smart device can have the apparatus for dynamically optimizing battery charging voltage.

In some embodiments, device 5500 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 5500.

In an example, the device 5500 comprises an SoC (System-on-Chip) 5501. An example boundary of the SoC 5501 is illustrated using dotted lines in **Fig. 4****,** with some example components being illustrated to be included within SoC 5501 - however, SoC 5501 may include any appropriate components of device 5500.

In some embodiments, device 5500 includes processor 5504. Processor 5504 can include one or more physical devices, such as microprocessors, application processors, microcontrollers, programmable logic devices, processing cores, or other processing implementations such as disaggregated combinations of multiple compute, graphics, accelerator, I/O and/or other processing chips. The processing operations performed by processor 5504 include the execution of an operating platform or operating system on which applications and/or device functions are executed. The processing operations include operations related to I/O (input/output) with a human user or with other devices, operations related to power management, operations related to connecting computing device 5500 to another device, and/or the like. The processing operations may also include operations related to audio I/O and/or display I/O.

In some embodiments, processor 5504 includes multiple processing cores (also referred to as cores) 5508a, 5508b, 5508c. Although merely three cores 5508a, 5508b, 5508c are illustrated in **Fig. 4****,** processor 5504 may include any other appropriate number of processing cores, e.g., tens, or even hundreds of processing cores. Processor cores 5508a, 5508b, 5508c may be implemented on a single integrated circuit (IC) chip. Moreover, the chip may include one or more shared and/or private caches, buses or interconnections, graphics and/or memory controllers, or other components.

In some embodiments, processor 5504 includes cache 5506. In an example, sections of cache 5506 may be dedicated to individual cores 5508 (e.g., a first section of cache 5506 dedicated to core 5508a, a second section of cache 5506 dedicated to core 5508b, and so on). In an example, one or more sections of cache 5506 may be shared among two or more of cores 5508. Cache 5506 may be split in different levels, e.g., level 1 (L1) cache, level 2 (L2) cache, level 3 (L3) cache, etc.

In some embodiments, processor core 5504 may include a fetch unit to fetch instructions (including instructions with conditional branches) for execution by the core 5504. The instructions may be fetched from any storage devices such as the memory 5530. Processor core 5504 may also include a decode unit to decode the fetched instruction. For example, the decode unit may decode the fetched instruction into a plurality of micro-operations. Processor core 5504 may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, execution unit may execute instructions out-of-order. Hence, processor core 5504 may be an out-of-order processor core in one embodiment. Processor core 5504 may also include a retirement unit. The retirement unit may retire executed instructions after they are committed. In an embodiment, retirement of the executed instructions may result in processor state being committed from the execution of the instructions, physical registers used by the instructions being de-allocated, etc. Processor core 5504 may also include a bus unit to enable communication between components of processor core 5504 and other components via one or more buses. Processor core 5504 may also include one or more registers to store data accessed by various components of the core 5504 (such as values related to assigned app priorities and/or sub-system states (modes) association.

In some embodiments, device 5500 comprises connectivity circuitries 5531. For example, connectivity circuitries 5531 includes hardware devices (e.g., wireless and/or wired connectors and communication hardware) and/or software components (e.g., drivers, protocol stacks), e.g., to enable device 5500 to communicate with external devices. Device 5500 may be separate from the external devices, such as other computing devices, wireless access points or base stations, etc.

In an example, connectivity circuitries 5531 may include multiple different types of connectivity. To generalize, the connectivity circuitries 5531 may include cellular connectivity circuitries, wireless connectivity circuitries, etc. Cellular connectivity circuitries of connectivity circuitries 5531 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 5531 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 5531 may include a network interface, such as a wired or wireless interface, e.g., so that a system embodiment may be incorporated into a wireless device, for example, a cell phone or personal digital assistant.

In some embodiments, device 5500 comprises control hub 5532, which represents hardware devices and/or software components related to interaction with one or more I/O devices. For example, processor 5504 may communicate with one or more of display 5522, one or more peripheral devices 5524, storage devices 5528, one or more other external devices 5529, etc., via control hub 5532. Control hub 5532 may be a chipset, a Platform Control Hub (PCH), and/or the like.

For example, control hub 5532 illustrates one or more connection points for additional devices that connect to device 5500, e.g., through which a user might interact with the system. For example, devices (e.g., devices 5529) that can be attached to device 5500 include microphone devices, speaker or stereo systems, audio devices, video systems or other display devices, keyboard or keypad devices, or other I/O devices for use with specific applications such as card readers or other devices.

As mentioned above, control hub 5532 can interact with audio devices, display 5522, etc. For example, input through a microphone or other audio device can provide input or commands for one or more applications or functions of device 5500. Additionally, audio output can be provided instead of, or in addition to display output. In another example, if display 5522 includes a touch screen, display 5522 also acts as an input device, which can be at least partially managed by control hub 5532. There can also be additional buttons or switches on computing device 5500 to provide I/O functions managed by control hub 5532. In one embodiment, control hub 5532 manages devices such as accelerometers, cameras, light sensors or other environmental sensors, or other hardware that can be included in device 5500. The input can be part of direct user interaction, as well as providing environmental input to the system to influence its operations (such as filtering for noise, adjusting displays for brightness detection, applying a flash for a camera, or other features).

In some embodiments, control hub 5532 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 5522 represents hardware (e.g., display devices) and software (e.g., drivers) components that provide a visual and/or tactile display for a user to interact with device 5500. Display 5522 may include a display interface, a display screen, and/or hardware device used to provide a display to a user. In some embodiments, display 5522 includes a touch screen (or touch pad) device that provides both output and input to a user. In an example, display 5522 may communicate directly with the processor 5504. Display 5522 can be one or more of an internal display device, as in a mobile electronic device or a laptop device or an external display device attached via a display interface (e.g., DisplayPort, etc.). In one embodiment display 5522 can be a head mounted display (HMD) such as a stereoscopic display device for use in virtual reality (VR) applications or augmented reality (AR) applications.

In some embodiments, and although not illustrated in the figure, in addition to (or instead of) processor 5504, device 5500 may include Graphics Processing Unit (GPU) comprising one or more graphics processing cores, which may control one or more aspects of displaying contents on display 5522.

Control hub 5532 (or platform controller hub) may include hardware interfaces and connectors, as well as software components (e.g., drivers, protocol stacks) to make peripheral connections, e.g., to peripheral devices 5524.

It will be understood that device 5500 could both be a peripheral device to other computing devices, as well as have peripheral devices connected to it. Device 5500 may have a "docking" connector to connect to other computing devices for purposes such as managing (e.g., downloading and/or uploading, changing, synchronizing) content on device 5500. Additionally, a docking connector can allow device 5500 to connect to certain peripherals that allow computing device 5500 to control content output, for example, to audiovisual or other systems.

In addition to a proprietary docking connector or other proprietary connection hardware, device 5500 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 5531 may be coupled to control hub 5532, e.g., in addition to, or instead of, being coupled directly to the processor 5504. In some embodiments, display 5522 may be coupled to control hub 5532, e.g., in addition to, or instead of, being coupled directly to processor 5504.

In some embodiments, device 5500 comprises memory 5530 coupled to processor 5504 via memory interface 5534. Memory 5530 includes memory devices for storing information in device 5500.

In some embodiments, memory 5530 includes apparatus to maintain stable clocking as described with reference to various embodiments. Memory can include nonvolatile (state does not change if power to the memory device is interrupted) and/or volatile (state is indeterminate if power to the memory device is interrupted) memory devices. Memory device 5530 can be a dynamic random-access memory (DRAM) device, a static random-access memory (SRAM) device, flash memory device, phase-change memory device, or some other memory device having suitable performance to serve as process memory. In one embodiment, memory 5530 can operate as system memory for device 5500, to store data and instructions for use when the one or more processors 5504 executes an application or process. Memory 5530 can store application data, user data, music, photos, documents, or other data, as well as system data (whether long-term or temporary) related to the execution of the applications and functions of device 5500.

Elements of various embodiments and examples are also provided as a machine-readable medium (e.g., memory 5530) for storing the computer-executable instructions (e.g., instructions to implement any other processes discussed herein). The machine-readable medium (e.g., memory 5530) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 5500 comprises temperature measurement circuitries 5540, e.g., for measuring temperature of various components of device 5500. In an example, temperature measurement circuitries 5540 may be embedded, or coupled or attached to various components, whose temperature are to be measured and monitored. For example, temperature measurement circuitries 5540 may measure temperature of (or within) one or more of cores 5508a, 5508b, 5508c, voltage regulator 5514, memory 5530, a mother-board of SoC 5501, and/or any appropriate component of device 5500. In some embodiments, temperature measurement circuitries 5540 include a low power hybrid reverse (LPHR) bandgap reference (BGR) and digital temperature sensor (DTS), which utilizes subthreshold metal oxide semiconductor (MOS) transistor and the PNP parasitic Bi-polar Junction Transistor (BJT) device to form a reverse BGR that serves as the base for configurable BGR or DTS operating modes. The LPHR architecture uses low-cost MOS transistors and the standard parasitic PNP device. Based on a reverse bandgap voltage, the LPHR can work as a configurable BGR. By comparing the configurable BGR with the scaled base-emitter voltage, the circuit can also perform as a DTS with a linear transfer function with single-temperature trim for high accuracy.

In some embodiments, device 5500 comprises power measurement circuitries 5542, e.g., for measuring power consumed by one or more components of the device 5500. In an example, in addition to, or instead of, measuring power, the power measurement circuitries 5542 may measure voltage and/or current. In an example, the power measurement circuitries 5542 may be embedded, or coupled or attached to various components, whose power, voltage, and/or current consumption are to be measured and monitored. For example, power measurement circuitries 5542 may measure power, current and/or voltage supplied by one or more voltage regulators 5514, power supplied to SoC 5501, power supplied to device 5500, power consumed by processor 5504 (or any other component) of device 5500, etc.

In some embodiments, device 5500 comprises one or more voltage regulator circuitries, generally referred to as voltage regulator (VR) 5514. VR 5514 generates signals at appropriate voltage levels, which may be supplied to operate any appropriate components of the device 5500. Merely as an example, VR 5514 is illustrated to be supplying signals to processor 5504 of device 5500. In some embodiments, VR 5514 receives one or more Voltage Identification (VID) signals, and generates the voltage signal at an appropriate level, based on the VID signals. Various type of VRs may be utilized for the VR 5514. For example, VR 5514 may include a "buck" VR, "boost" VR, a combination of buck and boost VRs, low dropout (LDO) regulators, switching DC-DC regulators, constant-on-time controller-based DC-DC regulator, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR, which is controlled by PCU 5510a/b and/or PMIC 5512. In some embodiments, each core has a network of distributed LDOs to provide efficient control for power management. The LDOs can be digital, analog, or a combination of digital or analog LDOs. In some embodiments, VR 5514 includes current tracking apparatus to measure current through power supply rail(s).

In some embodiments, VR 5514 includes a digital control scheme to manage states of a proportional-integral-derivative (PID) filter (also known as a digital Type-III compensator). The digital control scheme controls the integrator of the PID filter to implement non-linear control of saturating the duty cycle during which the proportional and derivative terms of the PID are set to 0 while the integrator and its internal states (previous values or memory) is set to a duty cycle that is the sum of the current nominal duty cycle plus a deltaD. The deltaD is the maximum duty cycle increment that is used to regulate a voltage regulator from ICCmin to ICCmax and is a configuration register that can be set post silicon. A state machine moves from a non-linear all ON state (which brings the output voltage Vout back to a regulation window) to an open loop duty cycle which maintains the output voltage slightly higher than the required reference voltage Vref. After a certain period in this state of open loop at the commanded duty cycle, the state machine then ramps down the open loop duty cycle value until the output voltage is close to the Vref commanded. As such, output chatter on the output supply from VR 5514 is completely eliminated (or substantially eliminated) and there is merely a single undershoot transition which could lead to a guaranteed Vmin based on a comparator delay and the di/dt of the load with the available output decoupling capacitance.

In some embodiments, VR 5514 includes a separate self-start controller, which is functional without fuse and/or trim information. The self-start controller protects VR 5514 against large inrush currents and voltage overshoots, while being capable of following a variable VID (voltage identification) reference ramp imposed by the system. In some embodiments, the self-start controller uses a relaxation oscillator built into the controller to set the switching frequency of the buck converter. The oscillator can be initialized using either a clock or current reference to be close to a desired operating frequency. The output of VR 5514 is coupled weakly to the oscillator to set the duty cycle for closed loop operation. The controller is naturally biased such that the output voltage is always slightly higher than the set point, eliminating the need for any process, voltage, and/or temperature (PVT) imposed trims.

In some embodiments, device 5500 comprises one or more clock generator circuitries, generally referred to as clock generator 5516. Clock generator 5516 generates clock signals at appropriate frequency levels, which may be supplied to any appropriate components of device 5500. Merely as an example, clock generator 5516 is illustrated to be supplying clock signals to processor 5504 of device 5500. In some embodiments, clock generator 5516 receives one or more Frequency Identification (FID) signals, and generates the clock signals at an appropriate frequency, based on the FID signals.

In some embodiments, device 5500 comprises battery 5518 supplying power to various components of device 5500. Merely as an example, battery 5518 is illustrated to be supplying power to processor 5504. Although not illustrated in the figures, device 5500 may comprise a charging circuitry, e.g., to recharge the battery, based on Alternating Current (AC) power supply received from an AC adapter.

In some embodiments, battery 5518 periodically checks an actual battery capacity or energy with charge to a preset voltage (e.g., 4.1 V). The battery then decides of the battery capacity or energy. If the capacity or energy is insufficient, then an apparatus in or associated with the battery slightly increases charging voltage to a point where the capacity is sufficient (e.g. from 4.1 V to 4.11 V). The process of periodically checking and slightly increase charging voltage is performed until charging voltage reaches specification limit (e.g., 4.2 V). The scheme described herein has benefits such as battery longevity can be extended, risk of insufficient energy reserve can be reduced, burst power can be used as long as possible, and/or even higher burst power can be used.

In some embodiments, the charging circuitry (e.g., 5518) comprises a buck-boost converter. This buck-boost converter comprises DrMOS or DrGaN devices used in place of half-bridges for traditional buck-boost converters. Various embodiments here are described with reference to DrMOS. However, the embodiments are applicable to DrGaN. The DrMOS devices allow for better efficiency in power conversion due to reduced parasitic and optimized MOSFET packaging. Since the dead-time management is internal to the DrMOS, the dead-time management is more accurate than for traditional buck-boost converters leading to higher efficiency in conversion. Higher frequency of operation allows for smaller inductor size, which in turn reduces the z-height of the charger comprising the DrMOS based buck-boost converter. The buck-boost converter of various embodiments comprises dual-folded bootstrap for DrMOS devices. In some embodiments, in addition to the traditional bootstrap capacitors, folded bootstrap capacitors are added that cross-couple inductor nodes to the two sets of DrMOS switches.

In some embodiments, device 5500 comprises Power Control Unit (PCU) 5510 (also referred to as Power Management Unit (PMU), Power Management Controller (PMC), Power Unit (p-unit), etc.). In an example, some sections of PCU 5510 may be implemented by one or more processing cores 5508, and these sections of PCU 5510 are symbolically illustrated using a dotted box and labelled PCU 5510a. In an example, some other sections of PCU 5510 may be implemented outside the processing cores 5508, and these sections of PCU 5510 are symbolically illustrated using a dotted box and labelled as PCU 5510b. PCU 5510 may implement various power management operations for device 5500. PCU 5510 may include hardware interfaces, hardware circuitries, connectors, registers, etc., as well as software components (e.g., drivers, protocol stacks), to implement various power management operations for device 5500.

In various embodiments, PCU or PMU 5510 is organized in a hierarchical manner forming a hierarchical power management (HPM). HPM of various embodiments builds a capability and infrastructure that allows for package level management for the platform, while still catering to islands of autonomy that might exist across the constituent die in the package. HPM does not assume a pre-determined mapping of physical partitions to domains. An HPM domain can be aligned with a function integrated inside a dielet, to a dielet boundary, to one or more dielets, to a companion die, or even a discrete CXL device. HPM addresses integration of multiple instances of the same die, mixed with proprietary functions or 3rd party functions integrated on the same die or separate die, and even accelerators connected via CXL (e.g., Flexbus) that may be inside the package, or in a discrete form factor.

HPM enables designers to meet the goals of scalability, modularity, and late binding. HPM also allows PMU functions that may already exist on other dice to be leveraged, instead of being disabled in the flat scheme. HPM enables management of any arbitrary collection of functions independent of their level of integration. HPM of various embodiments is scalable, modular, works with symmetric multi-chip processors (MCPs), and works with asymmetric MCPs. For example, HPM does not need a signal PM controller and package infrastructure to grow beyond reasonable scaling limits. HPM enables late addition of a die in a package without the need for change in the base die infrastructure. HPM addresses the need of disaggregated solutions having dies of different process technology nodes coupled in a single package. HPM also addresses the needs of companion die integration solutions-on and off package.

In various embodiments, each die (or dielet) includes a power management unit (PMU) or p-unit. For example, processor dies can have a supervisor p-unit, supervisee p-unit, or a dual role supervisor/supervisee p-unit. In some embodiments, an I/O die has its own dual role p-unit such as supervisor and/or supervisee p-unit. The p-units in each die can be instances of a generic p-unit. In one such example, all p-units have the same capability and circuits, but are configured (dynamically or statically) to take a role of a supervisor, supervisee, and/or both. In some embodiments, the p-units for compute dies are instances of a compute p-unit while p-units for IO dies are instances of an IO p-unit different from the compute p-unit. Depending on the role, p-unit acquires specific responsibilities to manage power of the multichip module and/or computing platform. While various p-units are described for dies in a multichip module or system-on-chip, a p-unit can also be part of an external device such as I/O device.

Here, the various p-units do not have to be the same. The HPM architecture can operate very different types of p-units. One common feature for the p-units is that they are expected to receive HPM messages and are expected to be able to comprehend them. In some embodiments, the p-unit of IO dies may be different than the p-unit of the compute dies. For example, the number of register instances of each class of register in the IO p-unit is different than those in the p-units of the compute dies. An IO die has the capability of being an HPM supervisor for CXL connected devices, but compute die may not need to have that capability. The IO and computes dice also have different firmware flows and possibly different firmware images. These are choices that an implementation can make. An HPM architecture can choose to have one superset firmware image and selectively execute flows that are relevant to the die type the firmware is associated with. Alternatively, there can be a customer firmware for each p-unit type; it can allow for more streamlined sizing of the firmware storage requirements for each p-unit type.

The p-unit in each die can be configured as a supervisor p-unit, supervisee p-unit or with a dual role of supervisor/supervisee. As such, p-units can perform roles of supervisor or supervisee for various domains. In various embodiments, each instance of p-unit is capable of autonomously managing local dedicated resources and contains structures to aggregate data and communicate between instances to enable shared resource management by the instance configured as the shared resource supervisor. A message and wire-based infrastructure is provided that can be duplicated and configured to facilitate management and flows between multiple p-units.

In some embodiments, power and thermal thresholds are communicated by a supervisor p-unit to supervisee p-units. For example, a supervisor p-unit learns of the workload (present and future) of each die, power measurements of each die, and other parameters (e.g., platform level power boundaries) and determines new power limits for each die. These power limits are then communicated by supervisor p-units to the supervisee p-units via one or more interconnects and fabrics. In some embodiments, a fabric indicates a group of fabrics and interconnect including a first fabric, a second fabric, and a fast response interconnect. In some embodiments, the first fabric is used for common communication between a supervisor p-unit and a supervisee p-unit. These common communications include change in voltage, frequency, and/or power state of a die which is planned based on a number of factors (e.g., future workload, user behavior, etc.). In some embodiments, the second fabric is used for higher priority communication between supervisor p-unit and supervisee p-unit. Example of higher priority communication include a message to throttle because of a possible thermal runaway condition, reliability issue, etc. In some embodiments, a fast response interconnect is used for communicating fast or hard throttle of all dies. In this case, a supervisor p-unit may send a fast throttle message to all other p-units, for example. In some embodiments, a fast response interconnect is a legacy interconnect whose function can be performed by the second fabric.

The HPM architecture of various embodiments enables scalability, modularity, and late binding of symmetric and/or asymmetric dies. Here, symmetric dies are dies of same size, type, and/or function, while asymmetric dies are dies of different size, type, and/or function. Hierarchical approach also allows PMU functions that may already exist on other dice to be leveraged, instead of being disabled in the traditional flat power management scheme. HPM does not assume a pre-determined mapping of physical partitions to domains. An HPM domain can be aligned with a function integrated inside a dielet, to a dielet boundary, to one or more dielets, to a companion die, or even a discrete CXL device. HPM enables management of any arbitrary collection of functions independent of their level of integration. In some embodiments, a p-unit is declared a supervisor p-unit based on one or more factors. These factors include memory size, physical constraints (e.g., number of pin-outs), and locations of sensors (e.g., temperature, power consumption, etc.) to determine physical limits of the processor.

The HPM architecture of various embodiments, provides a means to scale power management so that a single p-unit instance does not need to be aware of the entire processor. This enables power management at a smaller granularity and improves response times and effectiveness. Hierarchical structure maintains a monolithic view to the user. For example, at an operating system (OS) level, HPM architecture gives the OS a single PMU view even though the PMU is physically distributed in one or more supervisor-supervisee configurations.

In some embodiments, the HPM architecture is centralized where one supervisor controls all supervisees. In some embodiments, the HPM architecture is decentralized, wherein various p-units in various dies control overall power management by peer-to-peer communication. In some embodiments, the HPM architecture is distributed where there are different supervisors for different domains. One example of a distributed architecture is a tree-like architecture.

In some embodiments, device 5500 comprises Power Management Integrated Circuit (PMIC) 5512, e.g., to implement various power management operations for device 5500. In some embodiments, PMIC 5512 is a Reconfigurable Power Management ICs (RPMICs) and/or an IMVP (Intel^{®} Mobile Voltage Positioning). In an example, the PMIC is within an IC die separate from processor 5504. The may implement various power management operations for device 5500. PMIC 5512 may include hardware interfaces, hardware circuitries, connectors, registers, etc., as well as software components (e.g., drivers, protocol stacks), to implement various power management operations for device 5500.

In an example, device 5500 comprises one or both PCU 5510 or PMIC 5512. In an example, any one of PCU 5510 or PMIC 5512 may be absent in device 5500, and hence, these components are illustrated using dotted lines.

Various power management operations of device 5500 may be performed by PCU 5510, by PMIC 5512, or by a combination of PCU 5510 and PMIC 5512. For example, PCU 5510 and/or PMIC 5512 may select a power state (e.g., P-state) for various components of device 5500. For example, PCU 5510 and/or PMIC 5512 may select a power state (e.g., in accordance with the ACPI (Advanced Configuration and Power Interface) specification) for various components of device 5500. Merely as an example, PCU 5510 and/or PMIC 5512 may cause various components of the device 5500 to transition to a sleep state, to an active state, to an appropriate C state (e.g., C0 state, or another appropriate C state, in accordance with the ACPI specification), etc. In an example, PCU 5510 and/or PMIC 5512 may control a voltage output by VR 5514 and/or a frequency of a clock signal output by the clock generator, e.g., by outputting the VID signal and/or the FID signal, respectively. In an example, PCU 5510 and/or PMIC 5512 may control battery power usage, charging of battery 5518, and features related to power saving operation.

The clock generator 5516 can comprise a phase locked loop (PLL), frequency locked loop (FLL), or any suitable clock source. In some embodiments, each core of processor 5504 has its own clock source. As such, each core can operate at a frequency independent of the frequency of operation of the other core. In some embodiments, PCU 5510 and/or PMIC 5512 performs adaptive or dynamic frequency scaling or adjustment. For example, clock frequency of a processor core can be increased if the core is not operating at its maximum power consumption threshold or limit. In some embodiments, PCU 5510 and/or PMIC 5512 determines the operating condition of each core of a processor, and opportunistically adjusts frequency and/or power supply voltage of that core without the core clocking source (e.g., PLL of that core) losing lock when the PCU 5510 and/or PMIC 5512 determines that the core is operating below a target performance level. For example, if a core is drawing current from a power supply rail less than a total current allocated for that core or processor 5504, then PCU 5510 and/or PMIC 5512 can temporality increase the power draw for that core or processor 5504 (e.g., by increasing clock frequency and/or power supply voltage level) so that the core or processor 5504 can perform at higher performance level. As such, voltage and/or frequency can be increased temporality for processor 5504 without violating product reliability.

In an example, PCU 5510 and/or PMIC 5512 may perform power management operations, e.g., based at least in part on receiving measurements from power measurement circuitries 5542, temperature measurement circuitries 5540, charge level of battery 5518, and/or any other appropriate information that may be used for power management. To that end, PMIC 5512 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 5510 and/or PMIC 5512 in at least one embodiment to allow PCU 5510 and/or PMIC 5512 to manage processor core energy at least in part based on value(s) detected by one or more of the sensors.

Also illustrated is an example software stack of device 5500 (although not all elements of the software stack are illustrated). Merely as an example, processors 5504 may execute application programs 5550, Operating System 5552, one or more Power Management (PM) specific application programs (e.g., generically referred to as PM applications 5558), and/or the like. PM applications 5558 may also be executed by the PCU 5510 and/or PMIC 5512. OS 5552 may also include one or more PM applications 5556a, 5556b, 5556c. The OS 5552 may also include various drivers 5554a, 5554b, 5554c, etc., some of which may be specific for power management purposes. In some embodiments, device 5500 may further comprise a Basic Input/output System (BIOS) 5520. BIOS 5520 may communicate with OS 5552 (e.g., via one or more drivers 5554), communicate with processors 5504, etc.

For example, one or more of PM applications 5558, 5556, drivers 5554, BIOS 5520, etc. may be used to implement power management specific tasks, e.g., to control voltage and/or frequency of various components of device 5500, to control wake-up state, sleep state, and/or any other appropriate power state of various components of device 5500, control battery power usage, charging of the battery 5518, features related to power saving operation, etc.

In some embodiments, battery 5518 is a Li-metal battery with a pressure chamber to allow uniform pressure on a battery. The pressure chamber is supported by metal plates (such as pressure equalization plate) used to give uniform pressure to the battery. The pressure chamber may include pressured gas, elastic material, spring plate, etc. The outer skin of the pressure chamber is free to bow, restrained at its edges by (metal) skin, but still exerts a uniform pressure on the plate that is compressing the battery cell. The pressure chamber gives uniform pressure to battery, which is used to enable high-energy density battery with, for example, 20% more battery life.

In some embodiments, pCode executing on PCU SS 10a/b has a capability to enable extra compute and telemetries resources for the runtime support of the pCode. Here pCode refers to a firmware executed by PCU 55 10a/b to manage performance of the 5501. For example, pCode may set frequencies and appropriate voltages for the processor. Part of the pCode are accessible via OS 5552. In various embodiments, mechanisms and methods are provided that dynamically change an Energy Performance Preference (EPP) value based on workloads, user behavior, and/or system conditions. There may be a well-defined interface between OS 5552 and the pCode. The interface may allow or facilitate the software configuration of several parameters and/or may provide hints to the pCode. As an example, an EPP parameter may inform a pCode algorithm as to whether performance or battery life is more important.

This support may be done as well by the OS 5552 by including machine-learning support as part of OS 5552 and either tuning the EPP value that the OS hints to the hardware (e.g., various components of SoC 5501) by machine-learning prediction, or by delivering the machine-learning prediction to the pCode in a manner similar to that done by a Dynamic Tuning Technology (DTT) driver. In this model, OS 5552 may have visibility to the same set of telemetries as are available to a DTT. As a result of a DTT machine-learning hint setting, pCode may tune its internal algorithms to achieve optimal power and performance results following the machine-learning prediction of activation type. The pCode as example may increase the responsibility for the processor utilization change to enable fast response for user activity, or may increase the bias for energy saving either by reducing the responsibility for the processor utilization or by saving more power and increasing the performance lost by tuning the energy saving optimization. This approach may facilitate saving more battery life in case the types of activities enabled lose some performance level over what the system can enable. The pCode may include an algorithm for dynamic EPP that may take the two inputs, one from OS 5552 and the other from software such as DTT, and may selectively choose to provide higher performance and/or responsiveness. As part of this method, the pCode may enable in the DTT an option to tune its reaction for the DTT for different types of activity.

In some embodiments, pCode improves the performance of the SoC in battery mode. In some embodiments, pCode allows drastically higher SoC peak power limit levels (and thus higher Turbo performance) in battery mode. In some embodiments, pCode implements power throttling and is part of Intel's Dynamic Tuning Technology (DTT). In various embodiments, the peak power limit is referred to PL4. However, the embodiments are applicable to other peak power limits. In some embodiments, pCode sets the *Vth* threshold voltage (the voltage level at which the platform will throttle the SoC) in such a way as to prevent the system from unexpected shutdown (or black screening). In some embodiments, pCode calculates the *Psoc,pk* SoC Peak Power Limit (e.g., PL4), according to the threshold voltage (*Vth*). These are two dependent parameters, if one is set, the other can be calculated. pCode is used to optimally set one parameter (*Vth*) based on the system parameters, and the history of the operation. In some embodiments, pCode provides a scheme to dynamically calculate the throttling level (*Psoc,th*) based on the available battery power (which changes slowly) and set the SoC throttling peak power (*Psoc,th*). In some embodiments, pCode decides the frequencies and voltages based on *Psoc,th.* In this case, throttling events have less negative effect on the SoC performance. Various embodiments provide a scheme which allows maximum performance (Pmax) framework to operate.

In some embodiments, VR 5514 includes a current sensor to sense and/or measure current through a high-side switch of VR 5514. In some embodiments the current sensor uses an amplifier with capacitively coupled inputs in feedback to sense the input offset of the amplifier, which can be compensated for during measurement. In some embodiments, the amplifier with capacitively coupled inputs in feedback is used to operate the amplifier in a region where the input common-mode specifications are relaxed, so that the feedback loop gain and/or bandwidth is higher. In some embodiments, the amplifier with capacitively coupled inputs in feedback is used to operate the sensor from the converter input voltage by employing high-PSRR (power supply rejection ratio) regulators to create a local, clean supply voltage, causing less disruption to the power grid in the switch area. In some embodiments, a variant of the design can be used to sample the difference between the input voltage and the controller supply, and recreate that between the drain voltages of the power and replica switches. This allows the sensor to not be exposed to the power supply voltage. In some embodiments, the amplifier with capacitively coupled inputs in feedback is used to compensate for power delivery network related (PDN-related) changes in the input voltage during current sensing.

Some embodiments use three components to adjust the peak power of SoC 5501 based on the states of a USB TYPE-C device 5529. These components include OS Peak Power Manager (part of OS 5552), USB TYPE-C Connector Manager (part of OS 5552), and USB TYPE-C Protocol Device Driver (e.g., one of drivers 5554a, 5554b, 5554c). In some embodiments, the USB TYPE-C Connector Manager sends a synchronous request to the OS Peak Power Manager when a USB TYPE-C power sink device is attached or detached from SoC 5501, and the USB TYPE-C Protocol Device Driver sends a synchronous request to the Peak Power Manager when the power sink transitions device state. In some embodiments, the Peak Power Manager takes power budget from the CPU when the USB TYPE-C connector is attached to a power sink and is active (e.g., high power device state). In some embodiments, the Peak Power Manager gives back the power budget to the CPU for performance when the USB TYPE-C connector is either detached or the attached and power sink device is idle (lowest device state).

In some embodiments, logic is provided to dynamically pick the best operating processing core for BIOS power-up flows and sleep exit flows (e.g., S3, S4, and/or S5). The selection of the bootstrap processor (BSP) is moved to an early power-up time instead of a fixed hardware selection at any time. For maximum boot performance, the logic selects the fastest capable core as the BSP at an early power-up time. In addition, for maximum power saving, the logic selects the most power efficient core as the BSP. Processor or switching for selecting the BSP happens during the boot-up as well as power-up flows (e.g., S3, S4, and/or S5 flows).

In some embodiments, the memories herein are organized in multi-level memory architecture and their performance is governed by a decentralized scheme. The decentralized scheme includes p-unit 5510 and memory controllers. In some embodiments, the scheme dynamically balances a number of parameters such as power, thermals, cost, latency and performance for memory levels that are progressively further away from the processor in the platform 5500 based on how applications are using memory levels that are further away from processor cores. In some examples, the decision making for the state of the far memory (FM) is decentralized. For example, a processor power management unit (p-unit), near memory controller (NMC), and/or far memory host controller (FMHC) makes decisions about the power and/or performance state of the FM at their respective levels. These decisions are coordinated to provide the most optimum power and/or performance state of the FM for a given time. The power and/or performance state of the memories adaptively change to changing workloads and other parameters even when the processor(s) is in a particular power state.

In some embodiments, apparatus 102 is provided that executes a power-up scheme for system 5500. In some embodiment, apparatus 102 applies a biometric sensor (e.g., a fingerprint sensor, eye sensor, etc.) to authenticate a user before enabling power-up of computing system 5500 or to resume transition to a power state (e.g., one of the power states defined by the Advance Configuration and Power Interface (ACPI)). Output of the biometric sensor is compared against data of a registered user for a match. The data may include an original copy of an output of the biometric sensor saved in a non-volatile memory (e.g., serial peripheral interface (SPI) flash device). If a match exists, a logic in the computing system will allow the computing system to power-up. In the absence of a match, the computing system will not be powered up. In some examples, battery charging of battery 5518 is also disabled if the match is not found.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "adjacent" here generally refers to a position of a thing being next to (e.g., immediately next to or close to with one or more things between them) or adjoining another thing (e.g., abutting it).

The term "circuit" or "module" may refer to one or more passive and/or active components that are arranged to cooperate with one another to provide a desired function.

The term "signal" may refer to at least one current signal, voltage signal, magnetic signal, or data/clock signal. The meaning of "a," "an," and "the" include plural references. The meaning of "in" includes "in" and "on."

The term "analog signal" is any continuous signal for which the time varying feature (variable) of the signal is a representation of some other time varying quantity, i.e., analogous to another time varying signal.

The term "digital signal" is a physical signal that is a representation of a sequence of discrete values (a quantified discrete-time signal), for example of an arbitrary bit stream, or of a digitized (sampled and analog-to-digital converted) analog signal.

The term "scaling" generally refers to converting a design (schematic and layout) from one process technology to another process technology and may be subsequently being reduced in layout area. In some cases, scaling also refers to upsizing a design from one process technology to another process technology and may be subsequently increasing layout area. The term "scaling" generally also refers to downsizing or upsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

The terms "left," "right," "front," "back," "top," "bottom," "over," "under," and the like in the description and in the claims, if any, are used for descriptive purposes and not necessarily for describing permanent relative positions.

It is pointed out that those elements of the figures having the same reference numbers (or names) as the elements of any other figure can operate or function in any manner similar to that described but are not limited to such.

For purposes of the embodiments, the transistors in various circuits and logic blocks described here are metal oxide semiconductor (MOS) transistors or their derivatives, where the MOS transistors include drain, source, gate, and bulk terminals. The transistors and/or the MOS transistor derivatives also include Tri-Gate and FinFET transistors, Gate All Around Cylindrical Transistors, Tunneling FET (TFET), Square Wire, or Rectangular Ribbon Transistors, ferroelectric FET (FeFETs), or other devices implementing transistor functionality like carbon nanotubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors (BJT PNP/NPN), BiCMOS, CMOS, etc., may be used without departing from the scope of the disclosure.

Here the term "supervisor" generally refers to a power controller, or power management, unit (a "p-unit"), which monitors and manages power and performance related parameters for one or more associated power domains, either alone or in cooperation with one or more other p-units. Power/performance related parameters may include but are not limited to domain power, platform power, voltage, voltage domain current, die current, load-line, temperature, device latency, utilization, clock frequency, processing efficiency, current/future workload information, and other parameters. It may determine new power or performance parameters (limits, average operational, etc.) for the one or more domains. These parameters may then be communicated to supervisee p-units, or directly to controlled or monitored entities such as VR or clock throttle control registers, via one or more fabrics and/or interconnects. A supervisor learns of the workload (present and future) of one or more dies, power measurements of the one or more dies, and other parameters (e.g., platform level power boundaries) and determines new power limits for the one or more dies. These power limits are then communicated by supervisor p-units to the supervisee p-units via one or more fabrics and/or interconnect. In examples where a die has one p-unit, a supervisor (Svor) p-unit is also referred to as supervisor die.

Here the term "supervisee" generally refers to a power controller, or power management, unit (a "p-unit"), which monitors and manages power and performance related parameters for one or more associated power domains, either alone or in cooperation with one or more other p-units and receives instructions from a supervisor to set power and/or performance parameters (e.g., supply voltage, operating frequency, maximum current, throttling threshold, etc.) for its associated power domain. In examples where a die has one p-unit, a supervisee (Svee) p-unit may also be referred to as a supervisee die. Note that a p-unit may serve either as a Svor, a Svee, or both a Svor/Svee p-unit

Here, the term "processor core" generally refers to an independent execution unit that can run one program thread at a time in parallel with other cores. A processor core may include a dedicated power controller or power control unit (p-unit) which can be dynamically or statically configured as a supervisor or supervisee. This dedicated p-unit is also referred to as an autonomous p-unit, in some examples. In some examples, all processor cores are of the same size and functionality i.e., symmetric cores. However, processor cores can also be asymmetric. For example, some processor cores have different size and/or function than other processor cores. A processor core can be a virtual processor core or a physical processor core.

Here the term "die" generally refers to a single continuous piece of semiconductor material (e.g. silicon) where transistors or other components making up a processor core may reside. Multi-core processors may have two or more processors on a single die, but alternatively, the two or more processors may be provided on two or more respective dies. Each die has a dedicated power controller or power control unit (p-unit) power controller or power control unit (p-unit) which can be dynamically or statically configured as a supervisor or supervisee. In some examples, dies are of the same size and functionality i.e., symmetric cores. However, dies can also be asymmetric. For example, some dies have different size and/or function than other dies.

Here, the term "interconnect" refers to a communication link, or channel, between two or more points or nodes. It may comprise one or more separate conduction paths such as wires, vias, waveguides, passive components, and/or active components. It may also comprise a fabric.

Here the term "interface" generally refers to software and/or hardware used to communicate with an interconnect. An interface may include logic and I/O driver/receiver to send and receive data over the interconnect or one or more wires.

Here the term "fabric" generally refers to communication mechanism having a known set of sources, destinations, routing rules, topology and other properties. The sources and destinations may be any type of data handling functional unit such as power management units. Fabrics can be two-dimensional spanning along an x-y plane of a die and/or three-dimensional (3D) spanning along an x-y-z plane of a stack of vertical and horizontally positioned dies. A single fabric may span multiple dies. A fabric can take any topology such as mesh topology, star topology, daisy chain topology. A fabric may be part of a network-on-chip (NoC) with multiple agents. These agents can be any functional unit.

Here the term "dielet" or "chiplet" generally refers to a physically distinct semiconductor die, typically connected to an adjacent die in a way that allows the fabric across a die boundary to function like a single fabric rather than as two distinct fabrics. Thus at least some dies may be dielets. Each dielet may include one or more p-units which can be dynamically or statically configured as a supervisor, supervisee or both.

Here the term "domain" generally refers to a logical or physical perimeter that has similar properties (e.g., supply voltage, operating frequency, type of circuits or logic, and/or workload type) and/or is controlled by a particular agent. For example, a domain may be a group of logic units or function units that are controlled by a particular supervisor. A domain may also be referred to an Autonomous Perimeter (AP). A domain can be an entire system-on-chip (SoC) or part of the SoC, and is governed by a p-unit.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus (102) comprising:
a power gate (112) controllable by a control signal, the power gate (112) coupled to a first power supply rail and a second power supply rail, wherein the second power supply rail is coupled to a computing platform (103);
logic (109) to generate the control signal to turn on or off the power gate (112) according to a match between a first biometric data stored in memory (111) and a second biometric data sensed by a biometric sensor (114);
a DC-DC converter (107) to receive a first power on the first power supply rail and to generate a third power on a third power supply rail; and
a power control switch (108) to provide one of the third power or a fourth power on a fourth power supply rail to a fifth power supply rail;
wherein the fourth power supply rail is coupled to an alternate power source (113); and
wherein the fifth power supply rail is to provide power to the biometric sensor (114), the logic (109) and the memory (111).

2. The apparatus (102) of claim 1, wherein the logic (109) is to turn off the power gate (112) to cut off a second power on the second power supply rail when the first biometric data does not match with the second biometric data.

3. The apparatus (102) of claim 1, wherein the logic (109) is to turn on the power gate (112) to provide the first power as a second power on the second power supply rail when the first biometric data matches with the second biometric data.

4. The apparatus (102) of any one of claims 1-3, further comprising a biometric controller (110) to issue an interrupt to the logic (109) when the biometric sensor generates the second biometric data, wherein the fifth power supply rail is further to provide power to the biometric controller.

5. The apparatus (102) of claim 1, wherein the alternate power source (114) comprises a coin battery.

6. The apparatus of claim 1 or claim 5, wherein the power control switch comprises a multiplexer which is to provide the fourth power to the fifth power supply rail when the third power is below a threshold.

7. The apparatus (102) of any one of claims 1-6, wherein the memory (111) is a non-volatile memory; and/or
wherein the biometric sensor (110) is one of: a finger print sensor, an eye system, or a face recognition apparatus; and/or
wherein the first power supply rail is coupled to a battery charger controller (101) which is coupled to a plurality of power sources; and, optionally, wherein the plurality of power sources includes: a USB Type-C power source, a battery, and an AC adaptor.

8. A system comprising:
a battery charger controller (101) to receive power from one or more power sources;
a power-up apparatus (102) coupled to the battery charger;
a processor system coupled to the power-up apparatus (102), wherein the processor system comprises a system-on-chip (5501), SoC, having one or more processing cores (5508a, 5508b, 5508c), wherein the power-up apparatus (102) comprises the apparatus of claim 1.

9. The system of claim 8, wherein the logic is to turn off the power gate to cut off a second power on the second power supply rail when the first biometric data does not match with the second biometric data.

10. The system of claim 8 or claim 9, wherein the logic is to turn on the power gate to provide the first power as a second power on the second power supply rail when the
first biometric data matches with the second biometric data.

## Patentansprüche

1. Einrichtung (102), die Folgendes umfasst:
ein Leistungsgatter (112), das durch ein Steuersignal steuerbar ist, wobei das Leistungsgatter (112) mit einer ersten Leistungsversorgungsschiene und einer zweiten Leistungsversorgungsschiene gekoppelt ist, wobei die zweite Leistungsversorgungsschiene mit einer Rechenplattform (103) gekoppelt ist;
Logik (109) zum Erzeugen des Steuersignals zum Ein- oder Ausschalten des Leistungsgatters (112) gemäß einer Übereinstimmung zwischen ersten biometrischen Daten, die in dem Speicher (111) gespeichert sind, und zweiten biometrischen Daten, die durch einen biometrischen Sensor (114) erfasst werden;
einen DC-DC-Wandler (107) zum Empfangen einer ersten Leistung auf der ersten Leistungsversorgungsschiene und zum Erzeugen einer dritten Leistung auf einer dritten Leistungsversorgungsschiene; und
einen Leistungssteuerschalter (108) zum Bereitstellen der dritten Leistung oder einer vierten Leistung an einer vierten Leistungsversorgungsschiene an eine fünfte Leistungsversorgungsschiene;
wobei die vierte Leistungsversorgungsschiene mit einer alternativen Leistungsquelle (113) gekoppelt ist; und
wobei die fünfte Leistungsversorgungsschiene dem biometrischen Sensor (114), der Logik (109) und dem Speicher (111) Leistung bereitstellen soll.

2. Einrichtung (102) nach Anspruch 1, wobei die Logik (109) dazu dient, das Leistungsgatter (112) auszuschalten, um eine zweite Leistung auf der zweiten Leistungsversorgungsschiene zu unterbrechen, wenn die ersten biometrischen Daten nicht mit den zweiten biometrischen Daten übereinstimmen.

3. Einrichtung (102) nach Anspruch 1, wobei die Logik (109) dazu dient, das Leistungsgatter (112) einzuschalten, um die erste Leistung als eine zweite Leistung auf der zweiten Leistungsversorgungsschiene bereitzustellen, wenn die ersten biometrischen Daten mit den zweiten biometrischen Daten übereinstimmen.

4. Einrichtung (102) nach einem der Ansprüche 1-3, ferner umfassend eine biometrische Steuerung (110) zum Ausgeben einer Unterbrechung an die Logik (109), wenn der biometrische Sensor die zweiten biometrischen Daten erzeugt, wobei die fünfte Leistungsversorgungsschiene ferner dazu dient, der biometrischen Steuerung Leistung bereitzustellen.

5. Einrichtung (102) nach Anspruch 1, wobei die alternative Leistungsquelle (114) eine Münzbatterie umfasst.

6. Einrichtung nach Anspruch 1 oder Anspruch 5, wobei der Leistungssteuerschalter einen Multiplexer umfasst, der die vierte Leistung an die fünfte Leistungsversorgungsschiene liefern soll, wenn die dritte Leistung unter einer Schwelle liegt.

7. Einrichtung (102) nach einem der Ansprüche 1-6, wobei der Speicher (111) ein nichtflüchtiger Speicher ist; und/oder
wobei der biometrische Sensor (110) einer von Folgendem ist: ein Fingerabdrucksensor, ein Augensystem oder eine Gesichtserkennungseinrichtung; und/oder
wobei die erste Leistungsversorgungsschiene mit einer Batterieladegerätesteuerung (101) gekoppelt ist, die mit mehreren Leistungsquellen gekoppelt ist; und wobei optional die mehreren Leistungsquellen Folgendes beinhalten: eine USB Type-C-Leistungsquelle, eine Batterie und einen AC-Adapter.

8. System, das Folgendes umfasst:
eine Batterieladegerätesteuerung (101) zum Empfangen von Leistung von einer oder mehreren Leistungsquellen;
eine Einschalteinrichtung (102), die mit dem Batterieladegerät gekoppelt ist;
ein Prozessorsystem, das mit der Einschalteinrichtung (102) gekoppelt ist, wobei das Prozessorsystem ein System-on-Chip (5501) (SoC) mit einem oder mehreren Verarbeitungskernen (5508a, 5508b, 5508c) umfasst, wobei die Einschalteinrichtung (102) die Einrichtung nach Anspruch 1 umfasst.

9. System nach Anspruch 8, wobei die Logik dazu dient, das Leistungsgatter auszuschalten, um eine zweite Leistung auf der zweiten Leistungsversorgungsschiene abzuschalten, wenn die ersten biometrischen Daten nicht mit den zweiten biometrischen Daten übereinstimmen.

10. System nach Anspruch 8 oder Anspruch 9, wobei die Logik das Leistungsgatter einschaltet, um die erste Leistung als zweite Leistung auf der zweiten Leistungsversorgungsschiene bereitzustellen, wenn die ersten biometrischen Daten mit den zweiten biometrischen Daten übereinstimmen.

## Revendications

1. Appareil (102) comprenant :
une porte de puissance (112) contrôlable par un signal de commande, la porte de puissance (112) étant couplée à un premier rail d'alimentation et à un deuxième rail d'alimentation, le deuxième rail d'alimentation étant couplé à une plate-forme informatique (103) ;
une logique (109) pour générer le signal de commande afin d'activer ou de désactiver la porte de puissance (112) en fonction d'une correspondance entre des premières données biométriques stockées dans la mémoire (111) et des deuxièmes données biométriques détectées par un capteur biométrique (114) ;
un convertisseur DC-DC (107) pour recevoir une première puissance sur le premier rail d'alimentation et pour générer une troisième puissance sur un troisième rail d'alimentation ; et
un commutateur de commande de puissance (108) pour fournir une troisième puissance ou une quatrième puissance sur un quatrième rail d'alimentation électrique à un cinquième rail d'alimentation électrique ;
où le quatrième rail d'alimentation est couplé à une source d'alimentation alternative (113) ; et
où le cinquième rail d'alimentation est destiné à alimenter le capteur biométrique (114), la logique (109) et la mémoire (111).

2. Appareil (102) selon la revendication 1, dans lequel la logique (109) doit désactiver la porte d'alimentation (112) pour couper une deuxième alimentation sur le deuxième rail d'alimentation lorsque les premières données biométriques ne correspondent pas aux deuxièmes données biométriques.

3. Appareil (102) selon la revendication 1, dans lequel la logique (109) doit activer la porte d'alimentation (112) pour fournir la première puissance en tant que deuxième puissance sur le deuxième rail d'alimentation lorsque les premières données biométriques correspondent aux deuxièmes données biométriques.

4. Appareil (102) selon l'une quelconque des revendications 1 à 3, comprenant en outre un contrôleur biométrique (110) pour émettre une interruption à la logique (109) lorsque le capteur biométrique génère les deuxièmes données biométriques, où le cinquième rail d'alimentation est en outre destiné à fournir de l'énergie au contrôleur biométrique.

5. Appareil (102) selon la revendication 1, dans lequel la source d'alimentation alternative (114) comprend une pile bouton.

6. Appareil selon la revendication 1 ou la revendication 5, dans lequel le commutateur de commande de puissance comprend un multiplexeur qui doit fournir la quatrième puissance au cinquième rail d'alimentation lorsque la troisième puissance est inférieure à un seuil.

7. Appareil (102) selon l'une quelconque des revendications 1 à 6, dans lequel la mémoire (111) est une mémoire non volatile ; et/ou
dans lequel le capteur biométrique (110) est l'un des suivants : un capteur d'empreintes digitales, un système oculaire ou un appareil de reconnaissance faciale ; et/ou dans lequel le premier rail d'alimentation est couplé à un contrôleur de chargeur de batterie (101) qui est couplé à une pluralité de sources d'alimentation ; et, en option, dans lequel la pluralité de sources d'alimentation comprend : une source d'alimentation USB Type-C, une batterie, et un adaptateur secteur.

8. Système comprenant :
un contrôleur de chargeur de batterie (101) pour recevoir de l'énergie d'une ou plusieurs sources d'énergie ;
un appareil de mise sous tension (102) couplé au chargeur de batterie ;
un système de processeur couplé à l'appareil de mise sous tension (102), où le système de processeur comprend un système sur puce (5501), SoC, ayant un ou plusieurs cœurs de traitement (5508a, 5508b, 5508c), où l'appareil de mise sous tension (102) comprend l'appareil de la revendication 1.

9. Système selon la revendication 8, dans lequel la logique doit désactiver la porte d'alimentation pour couper une deuxième alimentation sur le deuxième rail d'alimentation lorsque les premières données biométriques ne correspondent pas aux deuxièmes données biométriques.

10. Système selon la revendication 8 ou la revendication 9, dans lequel la logique doit activer la porte d'alimentation pour fournir la première puissance en tant que deuxième puissance sur le deuxième rail d'alimentation lorsque les premières données biométriques correspondent aux deuxièmes données biométriques.
